(19) Europäisches Patentamt / European Patent Office / Office européen des brevets

(11) **EP 4 042 336 B1**

(12) **EUROPEAN PATENT SPECIFICATION**

(45) Date of publication and mention
of the grant of the patent:
**25.06.2025 Bulletin 2025/26**

(21) Application number: **20728240.1**

(22) Date of filing: **28.02.2020**

(51) International Patent Classification (IPC):
**G06N 10/60** *(2022.01)* **G06N 20/00** *(2019.01)*

(52) Cooperative Patent Classification (CPC):
**G06N 10/60; G06N 20/00**

(86) International application number:
**PCT/RU2020/000108**

(87) International publication number:
**WO 2021/173029 (02.09.2021 Gazette 2021/35)**

(54) **IMPLEMENTATION OF VARIATIONAL QUANTUM EIGENSOLVER ALGORITHM BY USING TENSOR NETWORK FRAMEWORK**

IMPLEMENTIERUNG VON VARIATIVEM QUANTEN-EIGENSOLVER-ALGORITHMUS UNTER VERWENDUNG EINES TENSOR-NETZWERKGERÜSTS

IMPLÉMENTATION D'UN ALGORITHME DE RÉSOLUTION DE VALEURS PROPRES QUANTIQUE VARIATIONNEL À L'AIDE D'UNE STRUCTURE À RÉSEAU DE TENSEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2022 Bulletin 2022/33**

(73) Proprietors:
• **Huawei Technologies Co., Ltd.**
**Longgang District**
**Shenzhen, Guangdong**
**518129 (CN)**
• **Autonomous Non-profit Organization for Higher Education "Skolkovo Institute of Science and Technology"**
**Moscow region 143025 (RU)**

(72) Inventors:
• **KARDASHIN, Andrey**
**Moscow, 143026 (RU)**
• **UVAROV, Alexey**
**Moscow, 143026 (RU)**
• **MORALES, Mauro**
**Moscow, 143026 (RU)**
• **BIAMONTE, Jacob**
**Moscow, 143026 (RU)**

(74) Representative: **Thun, Clemens et al**
**Mitscherlich PartmbB**
**Patent- und Rechtsanwälte**
**Karlstraße 7**
**80333 München (DE)**

(56) References cited:
• **MARCELLO BENEDETTI ET AL: "Parameterized quantum circuits as machine learning models", ARXIV.ORG, CORNELL UNIVERSITY LIBRARY, 201 OLIN LIBRARY CORNELL UNIVERSITY ITHACA, NY 14853, 18 June 2019 (2019-06-18), XP081383181**
• **ALEXEY UVAROV ET AL: "Machine Learning Phase Transitions with a Quantum Processor", ARXIV.ORG, CORNELL UNIVERSITY LIBRARY, 201 OLIN LIBRARY CORNELL UNIVERSITY ITHACA, NY 14853, 24 June 2019 (2019-06-24), XP081383756**
• **KAINING ZHANG ET AL: "Quantum algorithm for finding the negative curvature direction in non-convex optimization", ARXIV.ORG, CORNELL UNIVERSITY LIBRARY, 201 OLIN LIBRARY CORNELL UNIVERSITY ITHACA, NY 14853, 17 September 2019 (2019-09-17), XP081482819**

EP 4 042 336 B1

- **MARIA SCHULD ET AL: "Evaluating analytic gradients on quantum hardware", ARXIV.ORG, CORNELL UNIVERSITY LIBRARY, 201 OLIN LIBRARY CORNELL UNIVERSITY ITHACA, NY 14853, 27 November 2018 (2018-11-27), XP081144345, DOI: 10.1103/ PHYSREVA.99.032331**

## Description

### TECHNICAL FIELD

The present disclosure relates generally to the field of quantum computing, and, in particular, to techniques for performing hybrid quantum-classical computations to implement a Variational Quantum Eigensolver (VQE) algorithm.

### BACKGROUND

Programmable devices that operate with and are accelerated by quantum mechanical phenomena are already available in a variety of types, which may be generally called quantum enhanced calculators and quantum simulators. These devices can be utilized for computational and information processing tasks, among which the tasks of finding eigenvalues of a Hamiltonian of some system are of particular interest.

The VQE algorithm has been developed exactly to solve these tasks. It is a hybrid quantum-classical algorithm which allows optimizing a scalar function of interest, also referred to as an objective function, by means of delegating computational operations between classical and quantum computing devices. In particular, the quantum computing device is used for preparing a parameterized quantum state, also referred to as an ansatz state, and measuring it in accordance with the objective function, while the classical computing device is responsible for updating parameters of the ansatz state in order to minimize its energy expectation, thereby finding a ground state energy or desired excited state energy or energies of the ansatz state.

The above-mentioned minimization of the energy expectation may be achieved by first- and second-order optimization techniques, which are based on using, respectively, first- and second-order partial derivatives of the objective function. More specifically, the first-order optimization technique uses gradient information to construct the next iteration in a classical optimization loop, whereas the second-order optimization technique uses a Hessian matrix to compute the next iteration in the classical optimization loop based on an optimization trajectory.

However, the structure of the ansatz state sometimes does not allow the first-order partial derivatives of the objective function to be calculated accurately. In this case, the first-order partial derivatives are approximated by finite differences. Although the accuracy of the minimization may be increased by using the second-order optimization techniques, i.e. the second-order partial derivatives of the objective function, they are in turn considered to be computationally expensive. On top of that, the first- and second-order optimization techniques both require changes in the structure of the ansatz state when calculating each partial derivative of the objective function.

The document MARCELLO BENEDETTI ET AL: "Parameterized Quantum Circuits as Machine Learning Models", XP081383181 shows the application of quantum circuits to machine learning models.

The document ALEXEI UVAROV ET AL: "Machine Learning Phase Transitions with a Quantum Processor", XP081383756 also shows the application of quantum processing in machine learning.

The document KAINING ZHANG ET AL: "Quantum algorithm for finding the negative curvature direction in non-convex optimization", XP081482819 shows the application of quantum computing in optimization calculations.

The document MARIA SCHULD ET AL: "Evaluating analytic gradients on quantum hardware", XP081144345 also deals with optimization calculations using quantum computing.

### SUMMARY

The present invention is defined by the independent claims. Further advantageous developments are shown by the dependent claims.

This summary is provided to introduce a selection of concepts in a simplified form that are further described below in the detailed description.

It is an objective of the present disclosure to provide a technical solution that enables accurate calculation of any-order partial derivatives for an objective function without having to change the structure of an ansatz state. It is a further objective of the present disclosure to improve the efficiency of the VQE algorithm by using these accurately calculated partial derivatives of the objective function.

The objectives above are achieved by the features of the independent claims in the appended claims. Further embodiments and examples are apparent from the dependent claims, the detailed description and the accompanying drawings.

According to a first aspect, a quantum computing device is provided, which comprises at least one quantum processing unit (QPU) and a memory coupled to the at least one QPU. The memory is configured to store executable instructions, which, when executed by the at least one QPU, cause the at least one QPU to perform the following steps:

(i) initialize at least one qubit in an initial state;

(ii) receive a user input indicating a Hamiltonian;

(iii) define an ansatz state for the initial state by applying a unitary operator to the at least one qubit, the unitary operator comprising at least one variational parameter and being represented by a tensor network;

(iv) evaluate an objective function based on the ansatz state and the Hamiltonian;

(v)

By using the tensor-network representation of the unitary operator, it is possible to construct the ansatz state which allows any-order partial derivatives of the objective function to be calculated accurately, i.e. without having to use any approximations for them. Moreover, these partial derivatives are calculated by the quantum computing device itself without any changes in the structure of the ansatz state - what is only needed is merely to shift one or more corresponding variational parameters of the unitary operator by a certain threshold value.

In one embodiment of the first aspect, the at least one QPU is further configured to: receive an update to the at least one variational parameter of the unitary operator from the computing device; change the at least one variational parameter of the unitary operator based on the update; and repeat operations (iii)-(vi). This embodiment makes it possible for the quantum computing device to be used more efficiently in the VQE algorithm, which is aimed at finding a minimum energy expectation of the ansatz state.

In one embodiment of the first aspect, the tensor network is implemented as a tree tensor network or a checkerboard tensor network. This embodiment may make the quantum computing device more flexible in use.

In one embodiment of the first aspect, the Hamiltonian is defined based on a product of Pauli operators. This Pauli-operator decomposition of the Hamiltonian may simplify the execution of operations (iii)-(v).

In one embodiment of the first aspect, the at least one qubit comprises multiple qubits, and the unitary operator comprises a product of unitary sub-operators each applied to corresponding two qubits of the multiple qubits. In this embodiment, the tensor network may comprise a set of interconnected building blocks each representing one of the unitary sub-operators. By so doing, it is possible to simplify the execution of operation (v).

In one embodiment of the first aspect, the at least one QPU is further configured to perform operation (v) by using a Hadamard test. This embodiment may additionally simplify the execution of operation (v).

In one embodiment of the first aspect, the at least one QPU is further configured to evaluate second-order partial derivatives for the objective function in operation (v) and provide the second-order partial derivatives as a Hessian matrix to the computing device in operation (vi). This embodiment may allow the second-order optimization technique to be used in respect of the objective function.

In one embodiment of the first aspect, the unitary operator comprises a set of exponents each comprising one of the at least one variational parameter, and the threshold value is equal to $\pi/2$. By so doing, it is possible to simplify the execution of operation (v) even more.

According to a second aspect, a classical computing device is provided, which comprises at least one processing unit and a memory coupled to the at least one processing unit. The memory is configured to store executable instructions, which, when executed by the at least processing unit, cause the at least one processing unit to perform the following steps:

(vii) receive the evaluated objective function and the evaluated at least one partial derivative of the order of interest for the objective function from the quantum computing device according to the first aspect;

(viii) based on the evaluated objective function and the evaluated at least one partial derivative of the order of interest for the objective function, prepare an update of the at least one variational parameter of the unitary operator;

(ix) provide the update of the at least one variational parameter of the unitary operator to the quantum computing device according to the first aspect, thereby causing the quantum computing device to repeat operations (iii)-(vi);

(x) repeat operations (vii)-(ix) until a predefined termination condition is fulfilled; and

(xi) in response to the predefined termination condition being fulfilled, provide to a user a last update of the at least one variational parameter of the unitary operator together with the ansatz state and an eigenvalue of the Hamiltonian, the ansatz state and the eigenvalue of the Hamiltonian corresponding to the last update of the at least one variational parameter of the unitary operator.

By using the objective function and the partial derivative(s) of the order of interest for the objective function which are both determined based on the tensor-network representation of the unitary operator, it is possible to improve the efficiency of minimizing the objection function, i.e., in other words, minimizing the energy expectation of the ansatz state in the VQE algorithm.

In one embodiment of the second aspect, the at least one processing unit is further configured to perform operations (vii)-(x) by using a supervised or unsupervised machine learning technique. This embodiment may improve the efficiency of executing operations (vii)-(x).

In one embodiment of the second aspect, the predefined termination condition comprises at least one of the following: a minimization of the evaluated objective function is provided; a predefined timer is expired; and a predefined repeat count is provided. This embodiment may make the computing device according to the second aspect more flexible in use by providing a reasonable tradeoff between computational costs and a desired minimum value of the objective function.

According to the second aspect of the invention, the at least one processing unit is further configured to perform operations (vii)-(x) by using a gradient descent method, Newton's method or a trust-region method. This embodiment may make the computing device according to the second aspect more flexible in use by providing it with the possibility to select which of said methods to use depending on the particular application.

According to the second aspect of the invention, the at least one processing unit is further configured, in response to the at least one processing unit receiving the evaluated at least one partial derivative of the order of interest as the Hessian matrix, to perform operations (vii)-(x) by using a Hessian-based exact trust-region method. This embodiment may allow the second-order optimization technique to be used in respect of the objective function in the VQE algorithm.

According to the invention, a computing apparatus is provided. The computing apparatus comprises the quantum computing device according to the first aspect and the classical computing device according to the second aspect. This may allow the quantum computations represented by operations (iii)-(v) and the classical (non-quantum) computations represented by operations (vii)-(ix) to be executed on a single chip. During operation, this single chip may be cooled to temperatures applicable to achieve superconductivity (usually required for quantum computations) at least partly within the components of the classical computing device according to the second aspect, thereby reducing the amount of heat dissipation therethrough. Moreover, depending on fabrication materials, the components of the classical computing device according to the second aspect may consume less power and generate less waste heat at such low temperatures compared to room temperature.

According to a non-claimed aspect, a user interface is provided, which comprises an input unit and a display unit. The input unit is communicatively coupled to the quantum computing device according to the first aspect and configured to receive and provide the user input to the at least one QPU. The display unit is communicatively coupled to the classical computing device according to the second aspect and configured to receive and display the last update of the at least one variational parameter of the unitary operator together with the ansatz state and the eigenvalue of the Hamiltonian. With such a user interface, even a user having no experience in quantum computing may easily obtain the above-mentioned results by simply inputting a desired form of the Hamiltonian. Thus, the user interface may be used even by general public users.

According to a fifth aspect, a computation method is provided.

By using the tensor-network representation of the unitary operator, it is possible to construct the ansatz state which allows any-order partial derivatives of the objective function to be calculated accurately, i.e. without having to use any approximations for them. Moreover, these partial derivatives are calculated by the quantum computing device itself without any changes in the structure of the ansatz state - what is only needed is merely to shift one or more corresponding variational parameters of the unitary operator by a certain threshold value.

By using the objective function and the partial derivative(s) of the order of interest for the objective function which are both determined based on the tensor-network representation of the unitary operator, it is possible to improve the efficiency of minimizing the objection function, i.e., in other words, minimizing the energy expectation of the ansatz state in the VQE algorithm.

According to a sixth aspect, a computer-readable storage medium is provided.

This may simplify the implementation of the method according to the fifth aspect in any hybrid quantum-classical computing device, such, for example, as the computing apparatus according to the third aspect. Other features and advantages of the present disclosure will be apparent upon reading the following detailed description and reviewing the accompanying drawings.

## BRIEF DESCRIPTION OF THE DRAWINGS

The essence of the present disclosure is explained below with reference to the accompanying drawings in which:

FIG. 1 shows a typical quantum circuit for evaluating each term of an objective function;

FIG. 2 shows a typical quantum circuit for implementing a Hadamard test;

FIGs. 3A and 3B show two different possible tensor networks, a tree tensor network (FIG. 3A) and a checkerboard tensor network (FIG. 3B), wherein each of which is applied to an initial state of qubits;

FIG. 4 shows a block-scheme of a quantum computing device in accordance with one exemplary embodiment;

FIG. 5 shows a flowchart of a method for operating the quantum computing device shown in FIG. 4 in accordance with one exemplary embodiment;

FIG. 6 is an explanatory diagram that shows how to decompose a unitary operator in accordance with the tensor network framework and in case when the total number of qubits is 4 (in the initial state);

FIG. 7 is an explanatory diagram that shows how it is possible to additionally decompose each two-qubit sub-operator of the unitary operator in accordance with the tensor network framework;

FIG. 8 is another explanatory diagram that shows how it is possible to additionally decompose each two-qubit sub-operator of the unitary operator in accordance with the tensor network framework;

FIG. 9 shows a block diagram of a classical computing device in accordance with one exemplary embodiment;

FIG. 10 shows a flowchart of a method for operating the computing device shown in FIG. 9 in accordance with one exemplary embodiment;

FIG. 11 shows a block diagram of a hybrid quantum-classical computing apparatus in accordance with one exemplary embodiment;

FIG. 12 shows a flowchart of a method for operating the apparatus shown in FIG. 11 in accordance with one exemplary embodiment;

FIG. 13 shows a block diagram of a user interface in accordance with one exemplary embodiment;

FIG. 14 shows simulation results of the VQE algorithm for a 4-qubit Ising Hamiltonian by using a three-layered checkerboard tensor network for an ansatz state.

## DETAILED DESCRIPTION

Various embodiments of the present disclosure are further described in more detail with reference to the accompanying drawings. These embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the devices and methods disclosed herein may be implemented in practice by using any numbers of the embodiments provided herein.

The word "exemplary" is used herein in the meaning of "used as an illustration". Unless otherwise stated, any embodiment described herein as "exemplary" should not be construed as preferable or having an advantage over other embodiments.

According to the embodiments disclosed herein, a quantum computing device, also referred to as a quantum computer, may relate to any computing device that directly uses quantum mechanical phenomena, such, for example, as superposition and entanglement, to solve required computational tasks. Existing implementation examples of such quantum computing devices include trapped ion quantum computers, scalable semiconductor-based quantum computers, quantum dot-based quantum computers, harmonic oscillator quantum computers, quantum computers based on cavity quantum electrodynamics (QED), optical photon quantum computers, heteropolymer-based quantum computers, cluster-state quantum computers, quantum computers with anyons, quantum computers based on spins in semiconductors, etc.

As used in the embodiments disclosed herein, a quantum processing unit (QPU), also referred to as a quantum processor or quantum chip, may relate to a physical (fabricated) chip that contains a number of qubits somehow interconnected. In this sense, the QPU serves a quantum information storage device. The QPU is the foundational component of the quantum computing device which further includes a housing for the QPU, control electronics, and many other components. It should be obvious to those skilled in the art that the QPU may be properly used in any of the above-mentioned or other implementation examples of the quantum computing device.

According to the embodiments disclosed herein, the qubits may refer to fundamental units of information for the quantum computing device. The qubits are contained in the QPU and generalize the concept of a classical digital bit. More specifically, a classical information storage device may encode two discrete states that are usually labeled "0" and "1". These two discrete (bit) states are physically represented by two different and distinguishable physical states of the classical information storage device, such as a direction or magnitude of magnetic field, current, or voltage, where the physical quantity encoding each bit state behaves according to the laws of classical physics. Similarly, each qubit also contains two discrete physical states, which may also be labeled "0" and "1". However, these two discrete (qubit) states are physically represented by two different and distinguishable physical states of a quantum information storage device (for example, the QPU, as discussed above), such as the direction or magnitude of magnetic field, current, or voltage, where the physical quantity encoding each qubit state behaves according to the laws of quantum physics. If the physical quantity that stores these states behaves quantum-mechanically, the QPU may additionally be placed in the superposition of "0" and "1". In other words, the qubit may exist in both "0" and "1" states at the same time, and therefore, may be used to perform a computation on the both states simultaneously. In general, N qubits may be in the superposition of 2N states. Quantum algorithms make use of this superposition property to speed up some computations.

Out of the quantum algorithms, the Variational Quantum Eigensolver (VQE) algorithm is of particular interest at the present time. It represents a hybrid quantum-classical algorithm that may be used to find eigenvalues of a (often large) matrix H. When the VQE algorithm is used in quantum simulations (in physics, chemistry, material sciences, logistics, drug discovery, etc.), the matrix H is a Hamiltonian of some system. In the VQE algorithm, a quantum subroutine is run inside of a classical optimization loop. The quantum subroutine of the VQE algorithm amounts to preparing a state based on a set of variational parameters and using the state to perform a series of required measurements in respect of an objective function and its partial derivative(s) of a certain order. Such a parametrized state is also referred to as an ansatz state. As for the classical optimization loop of the VQE algorithm, it uses the measured/evaluated objective function and its partial derivative(s) to iteratively update the set of variational parameters until the minimum value of the objective function or, in other words, the minimum energy expectation of the ansatz state is obtained.

Let us give a brief example of how to implement the VQE algorithm in one particular case when it is required to find the smallest eigenvalue $E_{min}$ and the corresponding eigenvectors of the Hamiltonian $H$. For an $n$-qubit initial state, the ansatz state may be written as follows:

$$|\psi(\boldsymbol{\theta})\rangle = U(\boldsymbol{\theta})|\boldsymbol{0}\rangle = \prod_j U_j(\boldsymbol{\theta}_j)|0\rangle^{\otimes n},$$

where $|\psi(\theta)\rangle$ is the ansatz state, $|\mathbf{0}\rangle = |0\rangle^{\otimes n}$ is the initial state vector for n qubits, "$\otimes$" is the tensor product operator, $U(\theta)$ is the unitary operator that is presented as the product of the unitary sub-operators $U_j(\theta_j)$, $\theta$ is the set of variational parameters $\theta_j$, $\theta_j \subset \theta$ and $\theta \in [0, 2\pi)^{\times n}$. It should be noted that any set or vector is hereinafter given in bold. Then, the optimal set $\theta$ of variational parameters is needed to be searched such that

$$\langle \psi(\boldsymbol{\theta})|H|\psi(\boldsymbol{\theta})\rangle = E_{min}.$$

Let us now decompose the Hamiltonian H into the product of Pauli operators:

$$H = \sum \beth_{\alpha\beta\ldots\gamma}^{ij\ldots k} \sigma_\alpha^i \sigma_\beta^j \ldots \sigma_\gamma^k, \qquad\qquad (1)$$

where $\beth \in \mathbb{R}$, each upper index denotes a qubit number and each lower index denotes corresponding one of the Pauli operators $\sigma_\alpha, \sigma_\beta, \ldots, \sigma_\gamma$ each selected from the set $\{I, X, Y, Z\}$, where $X, Y, Z$ are the Pauli matrices and $I$ is the identity matrix. For example, given $\alpha \in \{0, x, y, z\}$, the Pauli operator $\sigma_\alpha$ may defined as one of the following: $\sigma_0 = I, \sigma_x = X, \sigma_y = Y,$ and $\sigma_z = Z$. The same is applied for the rest Pauli operators $\sigma_\beta, \ldots, \sigma_\gamma$. With this Hamiltonian $H$, the objective function $F(\theta)$ of the VQE algorithm may be defined as follows:

$$F(\boldsymbol{\theta}) = \sum \beth_{\alpha\beta\ldots\gamma}^{ij\ldots k} \left\langle \mathbf{0} \right| U^\dagger(\boldsymbol{\theta}) \sigma_\alpha^i \sigma_\beta^j \ldots \sigma_\gamma^k U(\boldsymbol{\theta}) \left| \mathbf{0} \right\rangle, \qquad\qquad (2)$$

where "$\dagger$" denotes the Hermitian conjugate. Thus, the set $\theta$ of variational parameters should be tuned in such a way as to minimize the expectation value of the objective function $F(\theta)$.

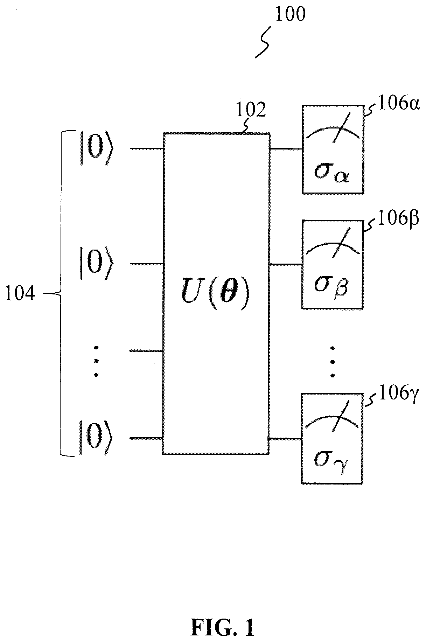

FIG. 1 shows a typical quantum circuit 100 for evaluating each term of the objective function $F(\theta)$. In some sense, the quantum circuit 100 may be considered as the graphical representation of the equation (2). As shown in FIG. 1, the quantum circuit 100 involves applying a unitary operator $U(\theta)$ 102 to qubits $|\mathbf{0}\rangle$ of an initial state 102 to obtain respective evaluations or measurements $106\alpha, 106\beta, \ldots 106\gamma$ of all the terms constituting the objective function $F(\theta)$. The quantum circuit 100 is used each time an update to the set $\theta$ of variational parameters occurs.

To minimize the expectation value of the objective function $F(\theta)$, it is possible to use the existing first- and second-order optimization techniques. More specifically, the first-order optimization technique uses a gradient descent method and requires the knowledge of the first-order partial derivative of the objective function $F(\theta)$. If the objective function $F(\theta)$ is

given by

$$F(\boldsymbol{\theta}) = \langle \psi(\boldsymbol{\theta})|H|\psi(\boldsymbol{\theta})\rangle,$$

then its first-order partial derivative with respect to some $\theta_k \in \theta$ may be written as follows:

$$\frac{\partial F(\boldsymbol{\theta})}{\partial \theta_k} = \frac{\partial}{\partial \theta_k}\langle \mathbf{0}|U^\dagger(\boldsymbol{\theta})HU(\boldsymbol{\theta})|\mathbf{0}\rangle = 2 \cdot \Re\left[\left\langle \mathbf{0}\right| U^\dagger(\boldsymbol{\theta})H\frac{\partial U(\boldsymbol{\theta})}{\partial \theta_k}\left|\mathbf{0}\right\rangle\right], \qquad (3)$$

where $\Re[\dots]$ is the real part of $\left\langle \mathbf{0}\right| U^\dagger(\boldsymbol{\theta})H\frac{\partial U(\boldsymbol{\theta})}{\partial \theta_k}\left|\mathbf{0}\right\rangle.$

As for the second-order optimization technique, it requires the knowledge of a Hessian matrix **H** given by

$$\mathbf{H}\big(F(\boldsymbol{\theta})\big) = \left[\begin{pmatrix} \frac{\partial^2 F(\boldsymbol{\theta})}{\partial \theta_1 \partial \theta_1} & \cdots & \frac{\partial^2 F(\boldsymbol{\theta})}{\partial \theta_1 \partial \theta_g} \\ \vdots & \ddots & \vdots \\ \frac{\partial^2 F(\boldsymbol{\theta})}{\partial \theta_g \partial \theta_1} & \cdots & \frac{\partial^2 F(\boldsymbol{\theta})}{\partial \theta_g \partial \theta_g} \end{pmatrix}\right], \qquad g = |\boldsymbol{\theta}|.$$

As shown above, the Hessian matrix **H** consists of the second-order partial derivatives of the objective function $F(\theta)$, which may generally be written as follows:

$$\frac{\partial^2 F(\boldsymbol{\theta})}{\partial \theta_k \partial \theta_l} = 2 \cdot \Re\left[\left\langle \mathbf{0}\right| U^\dagger(\boldsymbol{\theta})H\frac{\partial^2 U(\boldsymbol{\theta})}{\partial \theta_k \partial \theta_l}\left|\mathbf{0}\right\rangle + \left\langle \mathbf{0}\right| \frac{\partial U^\dagger(\boldsymbol{\theta})}{\partial \theta_l} H \frac{\partial U(\boldsymbol{\theta})}{\partial \theta_k}\left|\mathbf{0}\right\rangle\right]. \qquad (4)$$

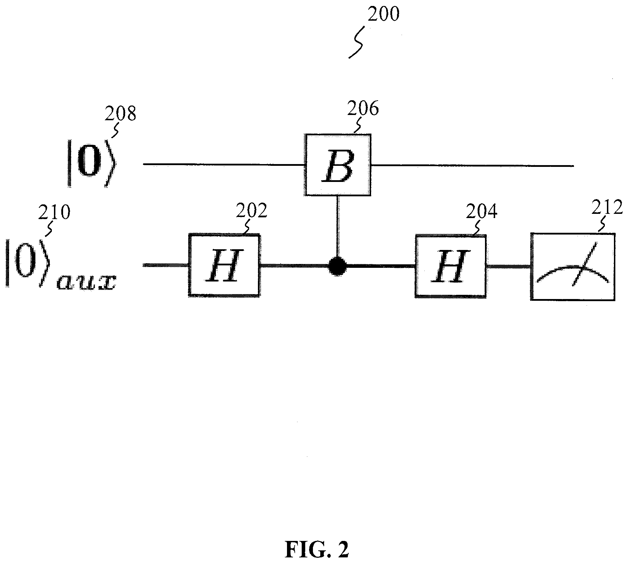

FIG. 2 shows a typical quantum circuit 200 for evaluating the first-order partial derivatives defined by the equation (3) and the second-order partial derivatives defined by the equation (4). The quantum circuit 200 indeed implements an Hadamard test, for which reason it may also be referred to as an Hadamard quantum circuit. The quantum circuit 200 comprises two Hadamard gates **H** 202 and 204, and a controlled gate B 206. The controlled gate B 206 may be defined in accordance with the equation (3) or (4). For example, if the first-order optimization technique is used, then the controlled gate B may be defined by

$$B = U^\dagger(\boldsymbol{\theta})H\frac{\partial U(\boldsymbol{\theta})}{\partial \theta_k}.$$

The quantum circuit 200 allows one to measure $\Re(0|B|0)$ for a target qubit 208 by using an auxiliary qubit 210 (the measurement itself is denoted by 212 in FIG. 2). In particular, it may be shown that

$$\Re[\langle \mathbf{0}|B|\mathbf{0}\rangle] = 2 \cdot Pr_0^{aux} - 1,$$

where $Pr_0^{aux}$ is the probability to obtain the result "0" upon measuring the auxiliary qubit 208 in the computational basis of $\{|\mathbf{0}\rangle, |\mathbf{1}\rangle\}$, where $|\mathbf{0}\rangle$ and $|\mathbf{1}\rangle$ are the eigenstates of the Pauli matrix $\sigma_Z$, which is expressed as follows:

$$\sigma_Z = \begin{pmatrix} 1 & 0 \\ 0 & -1 \end{pmatrix}.$$

However, the calculation of the first- and second-order partial derivatives of the objective function by using, for example, the quantum circuit 200 may often be cumbersome and computationally costly. Moreover, the ansatz state prepared by the quantum subroutine of the VQE algorithm sometimes does not allow the first-order partial derivatives of the objective function to be calculated accurately, whereupon the first-order partial derivatives are approximated by finite differences. On top of that, the first- and second-order optimization techniques both require changes in the structure of the ansatz state when calculating each partial derivative of the objective function.

The exemplary embodiments disclosed herein provide a technical solution that allows mitigating or even eliminating the above-sounded drawbacks peculiar to the prior art. In particular, the technical solution disclosed herein is based on using a tensor network framework in the quantum computing device to implement the quantum subroutine of the VQE algorithm. With this tensor network framework, the quantum computing device is able to accurately (without approximations) evaluate any-order partial derivative(s) of the objective function $F(\theta)$ by simply shifting one or more variational parameters of the unitary operator $U(\theta)$ by a threshold value. Said shifting does not change anyhow the structure of the ansatz state itself, and the threshold value depends on the type of the unitary operator $U(\theta)$, which in turn depends on particular application (computational tasks to be solved). Moreover, by using such accurately evaluated partial derivatives of the objective function $F(\theta)$, it is also possible to improve the efficiency of implementing the classical optimization loop of the VQE algorithm.

According to the exemplary embodiments disclosed herein, a tensor network, also referred to as a tensor diagram, may relate to a collection of tensors with indices connected according to a network pattern. Each tensor may graphically be represented by a block, for which reason the whole tensor network is an array of connected blocks. The unitary operator is intended to be presented as the tensor network such that each block comprises at least one variational parameter of the unitary operator. By so doing, it is possible to reduce the operation of taking any-order partial derivative of $F(\theta)$ with respect to $\theta_k$ to simply finding a corresponding block with said variational parameter $\theta_k$ and changing it in a proper manner.

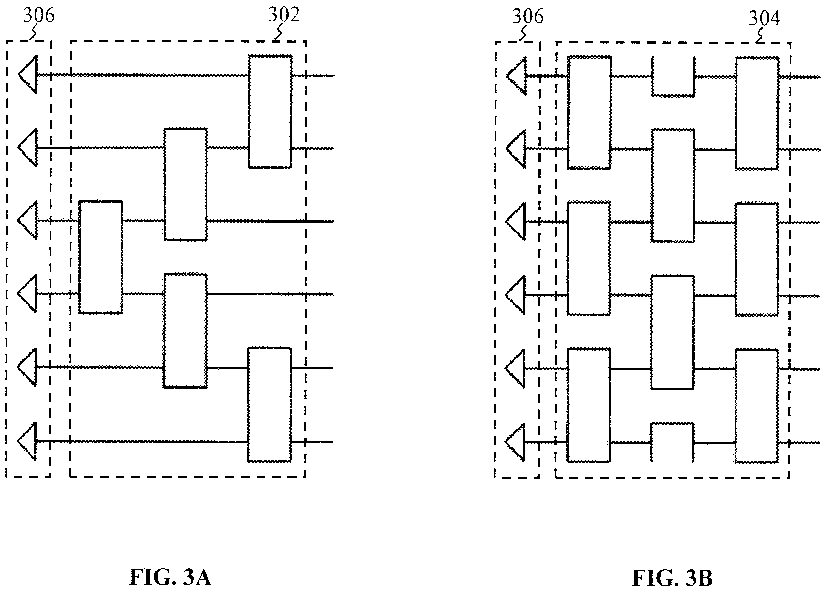

FIGs. 3A and 3B shows two different possible tensor networks: a tree tensor network 302 and a checkerboard tensor network 304, - each of which is applied to an initial state 306 of qubits. The tree tensor network 302 and the checkerboard tensor network 304 are well-known in the art, for which reason their detailed description is omitted herein. It should also be noted that the present disclosure is not limited to these tensor networks, and any other patterns of the tensor networks, such, for example, as matrix product states (MPS), multi-scale entanglement renormalization ansatz (MERA), projected entangled-pair states (PEPS), may be used in the embodiments disclosed herein, depending on particular application.

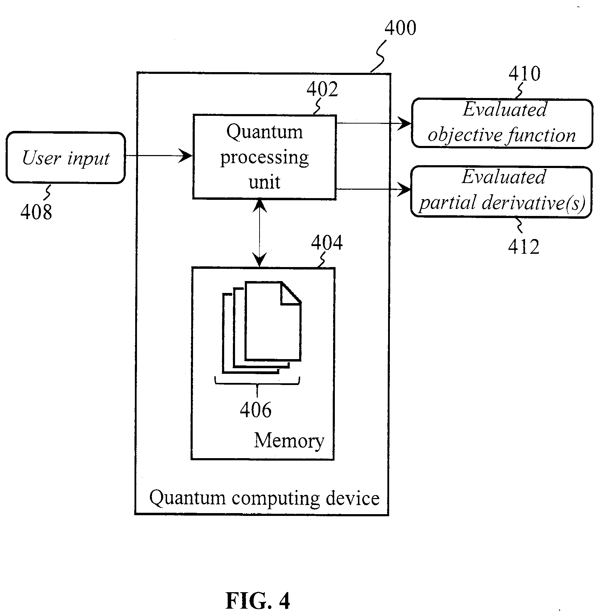

FIG. 4 shows a block diagram of a quantum computing device 400 in accordance with one exemplary embodiment. The quantum computing device 400 comprises a QPU 402 and a memory 404. The memory 404 stores executable instructions 406 which, when executed by the QPU 402, cause the QPU 402 to receive a user input 408 comprising a required form of a Hamiltonian (like the Hamiltonian $H$ defined by the equation (1)), and evaluate, based on the Hamiltonian, an objection function 410 (like the objective function $F(\theta)$ discussed above) and at least one partial derivative 412 of an order of interest for the objective function 410 in accordance with the operations which will be described later. It should be noted that the number, arrangement and interconnection of the constructive elements constituting the quantum computing device 400, which are shown in FIG. 4, are not intended to be any limitation of the present disclosure, but merely used to provide a general idea of how the constructive elements may be implemented within the quantum computing device 400. For example, if the quantum computing device 400 is implemented as an individual device, it may further comprise a transceiving means (not shown) configured to perform different operations required to transmit the objection function 410 and the at least one partial derivative 412 of the order of interest to any other computing device(s) for further processing and to receive feedback from the other computing device(s).

The QPU 402 may include a single quantum processor, or two or more quantum processors. The QPU 402 may also take the form of a superconducting quantum processor. The superconducting quantum processor may include multiple qubits and a plurality of superconducting coupling devices operable to selectively couple each pair of the qubits. Examples of the superconducting coupling device may include radio frequency Superconducting quantum Interference Devices (rf-SQUIDs) and direct current SQUIDs (dc-SQUIDs), which couple the qubits together by magnetic flux. In general, the SQUID includes a superconducting loop interrupted by one Josephson junction (rf-SQUID) or two Josephson junctions (dc-SQUID). The coupling device may be capable of both ferromagnetic coupling and antiferromagnetic coupling, depending on how the coupling device is utilized in the interconnect topology. In the case of flux coupling, ferromagnetic coupling means that parallel magnetic flux is energetically favorable, and antiferromagnetic coupling means that antiparallel magnetic flux is energetically favorable. Alternatively, charge-based coupling devices may be used in the QPU 402.

The memory 404 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The executable instructions 406 stored in the memory 404 may be configured as a computer executable code which causes the QPU 402 to perform the aspects of the present disclosure. The computer executable code for carrying out operations or steps for the aspects of the present disclosure may be written in any combination of one or more programming languages, such as Java, C++, or the like. In some examples, the computer executable code may be in the form of a high level language or in a pre-compiled form, and be generated by an interpreter (also prestored in the memory 404) on the fly.

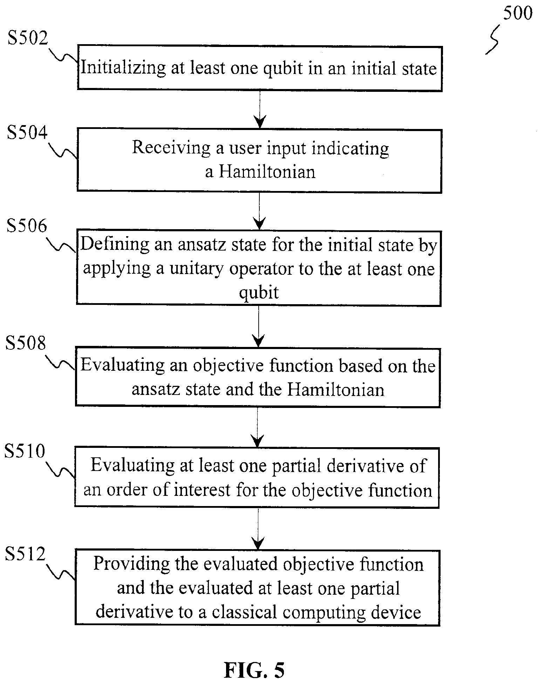

FIG. 5 shows a flowchart of a method 500 for operating the quantum computing device 400 in accordance with one exemplary embodiment. Each of the steps of the method 500 is performed by the QPU 402. The method 500 starts with a step S502, in which the QPU 402 initializes at least one qubit in an initial state. For example, the initial state may be the one which is easy to prepare - such as represented by a number of 0's, like the initial state 104 shown in FIG. 1.

However, any other structures of the initial state are also possible and may be used depending on particular application. Next, the method 500 proceeds to a step S504, in which the QPU 402 receives the user input 408 indicating the required Hamiltonian. The form of the Hamiltonian may depend on a quantum system to be studied by using the VQE algorithm and, correspondingly, the quantum computing device 400. In one exemplary embodiment, the Hamiltonian may be presented as the product of the Pauli operators, like the Hamiltonian H defined by the equation (1) above. Further, the method 500 proceeds to a step S506, in which the QPU 402 defines an ansatz state for the initial state by applying a unitary operator to the at least one qubit. The unitary operator comprises at least one variational parameter and is represented by a tensor network, like any one of the tensor networks 302 and 304 shown in FIGs. 3A and 3B, respectively. After that, the method 500 proceeds to a step S508, in which the QPU 402 measures or evaluates the objective function 410 based on the ansatz state and the Hamiltonian, and then to a step S510, in which the QPU 402 measures or evaluates the at least one partial derivative 412 of the order of interest for the objective function by shifting the at least one variational parameter of the unitary operator by a threshold value. As noted above, said shifting does not change anyhow the structure of the ansatz state itself. The method 500 ends up with a step S512, in which the QPU 402 provides the evaluated objective function 410 and the evaluated at least one partial derivative 412 of the order of interest for the objective function to a classical computing device which implements the classical optimization loop of the VQE algorithm, as will be discussed later.

It should be noted that the classical computing device may be further referred to as a computing device for short. Therefore, each mention of "computing device" should be construed as relating to the classical computing device. Whenever the matter concerns the quantum computing device, it will be mentioned without using any shortened forms. Given this, a reader should not be confused when s/he sees the terms "quantum computing device" and "computing device".

Referring back to the quantum computing device 400, one exemplary embodiment is possible, in which the QPU 402 may be further configured to receive an update to the at least one variational parameter of the unitary operator from the computing device. The QPU 402 may be then configured to change the at least one variational parameter of the unitary operator based on the update and, after that, repeat the steps S506-S5 12 of the method 500. This allows the quantum computing device 400 to be used more efficiently in the classical optimization loop of the VQE algorithm. At the same time, it should be noted that there may be a situation when the only one execution of the S506-S512 of the method 500 is enough to achieve the minimum expectation value of the objective function (for example, when the initial state prepared in the step S502 of the method 500 is quite close to the required ansatz state), and in this case, there will be no need to iteratively update the at least one variational parameter of the unitary operator.

In one exemplary embodiment, the at least one qubit comprises multiple qubits, and the unitary operator comprises a product of unitary sub-operators each applied to corresponding two qubits of the multiple qubits. In this embodiment, the tensor network comprises a set of interconnected building blocks each representing one of the unitary sub-operators.

Let us now give one example of the above-described embodiment with the unitary sub-operators. At first, let the unitary operator be called an all-qubit operator and each unitary sub-operator be called a two-qubit sub-operator. Then, we may decompose the all-qubit operator as follows:

$$U(\boldsymbol{\theta}) = \prod_j U_j^{ab}(\boldsymbol{\theta}_j), \qquad\qquad (5)$$

where $U(\theta)$ is the all-qubit operator, $U_j^{ab}(\boldsymbol{\theta}_j)$ is the corresponding two-qubit sub-operator in the decomposition of $U(\theta)$, $a$ and $b$ are the superscripts denoting the numbers of two qubits which the corresponding two-qubit sub-operator acts on, and $\theta_j \subset \theta$ is the variational parameter of the corresponding two-qubit sub-operator.

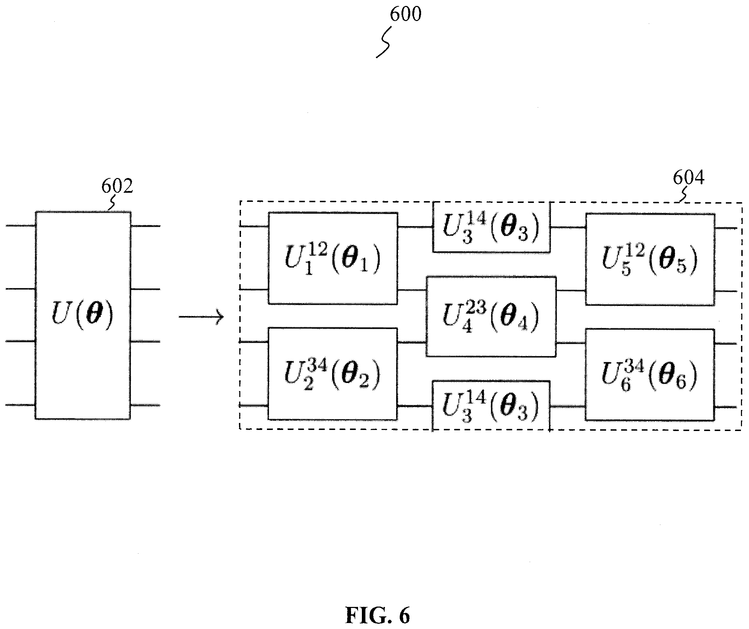

FIG. 6 is an explanatory diagram 600 that shows how to decompose $U(\theta)$ in accordance with the tensor network framework and in case when the total number of qubits is 4 (in the initial state). In particular, the explanatory diagram 600 shows a 4-qubit operator $U(\theta)$ 602 which is represented by a 4-qubit three-layered checkerboard tensor network 604. Given the checkerboard tensor network 604, we may write the 4-qubit operator $U(\theta)$ 602 in the following form:

$$U(\boldsymbol{\theta}) = U_1^{12}(\boldsymbol{\theta}_1)U_2^{34}(\boldsymbol{\theta}_2)U_3^{14}(\boldsymbol{\theta}_3)U_4^{23}(\boldsymbol{\theta}_4)U_5^{12}(\boldsymbol{\theta}_5)U_6^{34}(\boldsymbol{\theta}_6).$$

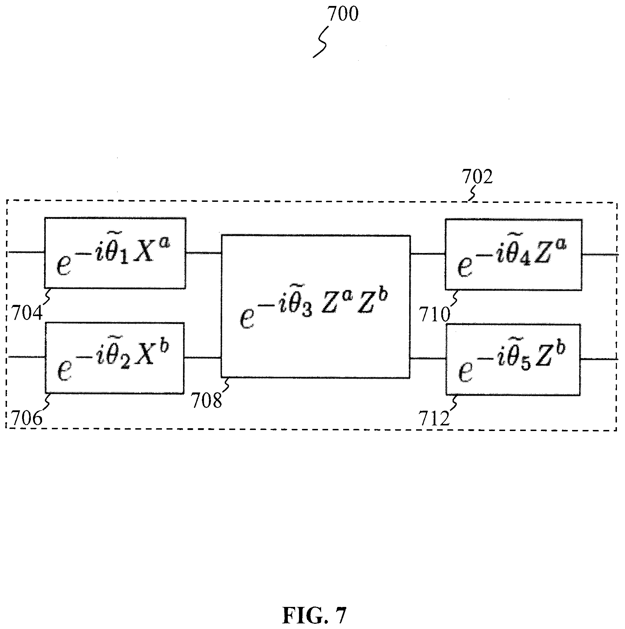

In turn, FIG. 7 is an explanatory diagram 700 that shows how it is possible to additionally decompose each two-qubit sub-operator $U_j^{ab}(\boldsymbol{\theta}_j)$ in accordance with the tensor network framework. In particular, the two-qubit sub-operator $U_j^{ab}(\boldsymbol{\theta}_j)$ is represented by a checkerboard tensor network 702 comprising two Pauli-X gates 704 and 706, an Ising (ZZ) coupling gate 708, and two Pauli-Z gates 710 and 712. Given this decomposition of the two-qubit sub-operator $U_j^{ab}(\boldsymbol{\theta}_j)$, we may write

$$U_j^{ab}(\boldsymbol{\theta}_j) = e^{-i\tilde{\theta}_5 Z^b} e^{-i\tilde{\theta}_4 Z^a} e^{-i\tilde{\theta}_3 Z^a Z^b} e^{-i\tilde{\theta}_2 X^b} e^{-i\tilde{\theta}_1 X^a},$$

where the exponents denote the rotations of the Pauli X-gates 704, 706, the Pauli-Z gates 710, 712, and the Ising (ZZ) coupling gate 708, $\tilde{\theta}_k \in \theta_j \subset \theta$, and $k$ = 1,2, ... 5. This five-parameter decomposition of the two-qubit sub-operator $U_j^{ab}(\boldsymbol{\theta}_j)$ is selected in this example because it is good for minimizing an Ising Hamiltonian (which is assumed to be the required Hamiltonian indicated in the user input 408). However, the two-qubit sub-operator $U_j^{ab}(\boldsymbol{\theta}_j)$ may be decomposed in any other manner, if required and depending on the required Hamiltonian and/or the quantum gates used in its tensor-network representation. With the two-qubit sub-operator $U_j^{ab}(\boldsymbol{\theta}_j)$ thus defined, it is possible to take any-order partial derivative of the two-qubit sub-operator $U_j^{ab}(\boldsymbol{\theta}_j)$ and, correspondingly, the objective function 410 itself. Given the above-indicated five-parameter decomposition of each $U_j^{ab}(\boldsymbol{\theta}_j)$ (i.e. the checkerboard tensor network 702) and the total number (six) of all two-qubit sub-operators in the decomposition of the 4-qubit operator $U(\theta)$ 602 (i.e. the checkerboard tensor network 604), one can see that each subset $\theta_j$ comprises five parameters $\tilde{\theta}_k$, which gives us $|\theta| = \mathbf{30}$. In other words,

$$\boldsymbol{\theta}_1 = (\tilde{\theta}_1, \tilde{\theta}_2, \tilde{\theta}_3, \tilde{\theta}_4, \tilde{\theta}_5),$$

$$\boldsymbol{\theta}_2 = (\tilde{\theta}_6, \tilde{\theta}_7, \tilde{\theta}_8, \tilde{\theta}_9, \tilde{\theta}_{10}),$$

$$\cdots$$

$$\boldsymbol{\theta}_6 = (\tilde{\theta}_{26}, \tilde{\theta}_{27}, \tilde{\theta}_{28}, \tilde{\theta}_{29}, \tilde{\theta}_{30}).$$

Thus, the first-order partial derivative, for example, with respect to $\tilde{\theta}_8$ is defined by

$$U(\boldsymbol{\theta}) = U_1^{12}(\boldsymbol{\theta}_1) \frac{\partial U_2^{34}(\boldsymbol{\theta}_2)}{\partial \tilde{\theta}_8} U_3^{14}(\boldsymbol{\theta}_3) U_4^{23}(\boldsymbol{\theta}_4) U_5^{12}(\boldsymbol{\theta}_5) U_6^{34}(\boldsymbol{\theta}_6),$$

where

$$\frac{\partial U_2^{34}(\boldsymbol{\theta}_2)}{\partial \tilde{\theta}_8} = e^{-i\tilde{\theta}_{10} Z^4} e^{-i\tilde{\theta}_9 Z^3} \left[ \frac{\partial}{\partial \tilde{\theta}_8} e^{-i\tilde{\theta}_8 Z^3 Z^4} \right] e^{-i\tilde{\theta}_7 X^4} e^{-i\tilde{\theta}_6 X^3} =$$

$$= e^{-i\tilde{\theta}_{10} Z^4} e^{-i\tilde{\theta}_9 Z^3} \left[ (-i Z^3 Z^4) e^{-i\tilde{\theta}_8 Z^3 Z^4} \right] e^{-i\tilde{\theta}_7 X^4} e^{-i\tilde{\theta}_6 X^3} =$$

$$= e^{-i\tilde{\theta}_{10} Z^4} e^{-i\tilde{\theta}_9 Z^3} \left[ e^{-i(\tilde{\theta}_8 + \pi/2) Z^3 Z^4} \right] e^{-i\tilde{\theta}_7 X^4} e^{-i\tilde{\theta}_6 X^3}.$$

Therefore, using the notation $\theta = (\tilde{\theta}_1, \ldots, \tilde{\theta}_k, \ldots, \tilde{\theta}_{30})$, one may obtain

$$\frac{\partial}{\partial \tilde{\theta}_k^n} U\left(\tilde{\theta}_1, \ldots, \tilde{\theta}_k, \ldots, \tilde{\theta}_{30}\right) = U\left(\tilde{\theta}_1, \ldots, \tilde{\theta}_k + \frac{\pi}{2}n, \ldots, \tilde{\theta}_{30}\right).$$

In particular, the second-order derivative will look like

$$\frac{\partial}{\partial \tilde{\theta}_k \tilde{\theta}_l} U\left(\tilde{\theta}_1, \ldots, \tilde{\theta}_k, \ldots, \tilde{\theta}_l, \ldots, \tilde{\theta}_{30}\right) = U\left(\tilde{\theta}_1, \ldots, \tilde{\theta}_k + \frac{\pi}{2}, \ldots, \tilde{\theta}_l + \frac{\pi}{2}, \ldots, \tilde{\theta}_{30}\right).$$

Given the above example, one can see that the operation of taking any-order partial derivative of the objective function 410 reduces to merely shifting the corresponding one or more variational parameters of the unitary operator by the threshold value $\pi/2$. At the same time, it should be noted that the present disclosure is not limited to this threshold value, and some other embodiments may require other threshold values depending on the type of the unitary operator to be used and, in particular, its tensor-network representation.

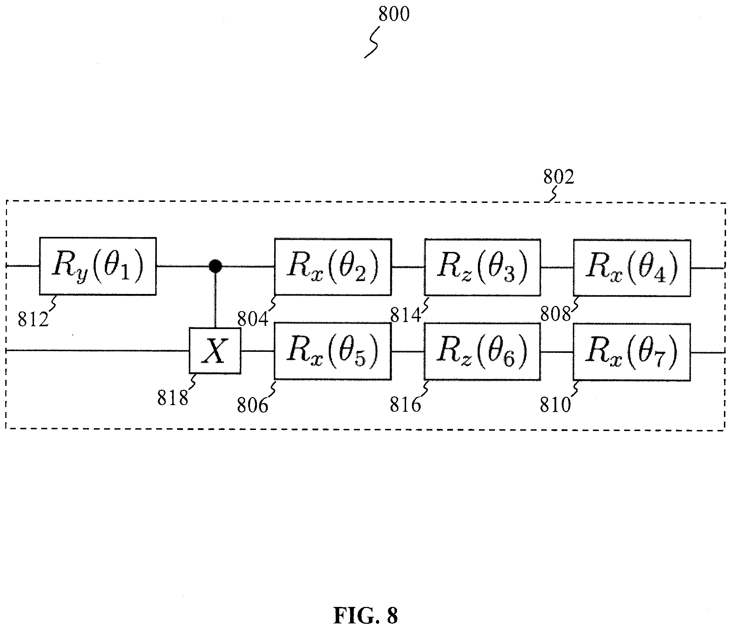

FIG. 8 is another explanatory diagram 800 that shows how it is possible to additionally decompose each two-qubit sub-operator $U_j^{ab}(\boldsymbol{\theta}_j)$ in accordance with the tensor network framework. In this case, the two-qubit sub-operator $U_j^{ab}(\boldsymbol{\theta}_j)$ is decomposed into seven parameters $\tilde{\theta}_k$ by using a checkerboard tensor network 802. The checkerboard tensor network 802 comprises four $R_x$-gates 804-810, one $R_y$-gate 812, two $R_z$-gates 814, 816, and one controlled Pauli-X gate 818 (which is also known as a controlled NOT gate or CNOT gate for short). Each of the $R_x$-, $R_y$- and $R_z$-gates corresponds to a single-qubit rotation through an angle equal to a certain $\tilde{\theta}_k$ (in radians) around one of the x-axis, y-axis and z-axis. More specifically, each of the $R_x$-, $R_y$- and $R_z$-gates may be defined by using the Pauli matrices $\sigma$ as follows:

$$R_\sigma\left(\tilde{\theta}_k\right) = e^{-i\tilde{\theta}_k\sigma}, \text{ where } \sigma \in \{1, X, Y, Z\}.$$

The checkerboard tensor network 802 is more flexible than the checkerboard tensor network 702, since it allows one to prepare any two-qubit ansatz state. At the same time, the checkerboard tensor network 802 involves using two more parameters (i.e. seven vs. five) and, therefore, is not suitable for dealing with the Ising Hamiltonian.

Generally, the tensor-network representation of the two-qubit sub-operators may be selected in accordance with the required Hamiltonian (like it is done above for the Ising Hamiltonian). For example, if the required Hamiltonian is an Ising Hamiltonian with YY terms, it would be then necessary to use an Ising (YY) coupling gate instead of the Ising (ZZ) coupling gate 708.

In one exemplary embodiment, the QPU 402 may be configured to evaluate the second-order partial derivatives 412 for the objective function 410 in the step S510 of the method 500. After that, the QPU 420 may be further configured to provide the second-order partial derivatives 412 as the Hessian matrix **H** to the computing device in the step S512 of the method 500. The Hessian matrix **H** may be further used in the second-order optimization technique.

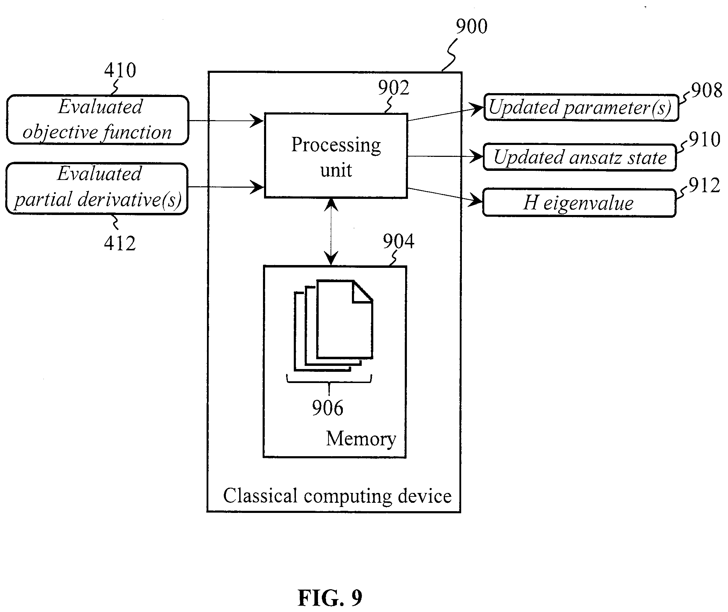

FIG. 9 shows a block diagram of a computing device 900 in accordance with one exemplary embodiment. The computing device 900 comprises a processing unit 902 and a memory 904. The memory 904 stores executable instructions 906 which, when executed by the processing unit 902, cause the processing unit 902 to receive the evaluated objective function 410 and the evaluated at least one partial derivative 412 of the order of interest from the quantum computing device 400, i.e. the QPU 402, and use them in the classical optimization loop of the VQE algorithm, as will be described later. It should be noted that the number, arrangement and interconnection of the constructive elements constituting the computing device 900, which are shown in FIG. 9, are not intended to be any limitation of the present disclosure, but merely used to provide a general idea of how the constructive elements may be implemented within the computing device 900. For example, if the computing device 900 is implemented as an individual device, it may further comprise a transceiving means (not shown) configured to communicate with the transceiving means of the quantum computing device 400 and/or any other devices, depending on particular application.

The processing unit 902 may be implemented as a central processing unit (CPU), general-purpose processor, single-purpose processor, microcontroller, microprocessor, application specific integrated circuit (ASIC), field programmable gate array (FPGA), digital signal processor (DSP), complex programmable logic device, etc. It should be also noted that the processing unit 902 may be implemented as any combination of one or more of the aforesaid. As an example, the processing unit may be a combination of two or more microprocessors.

As for the memory 904 and the executable instructions 906, they may be implemented in the same or similar manner as the memory 404 and the executable instructions 406, respectively, in the quantum computing device 400.

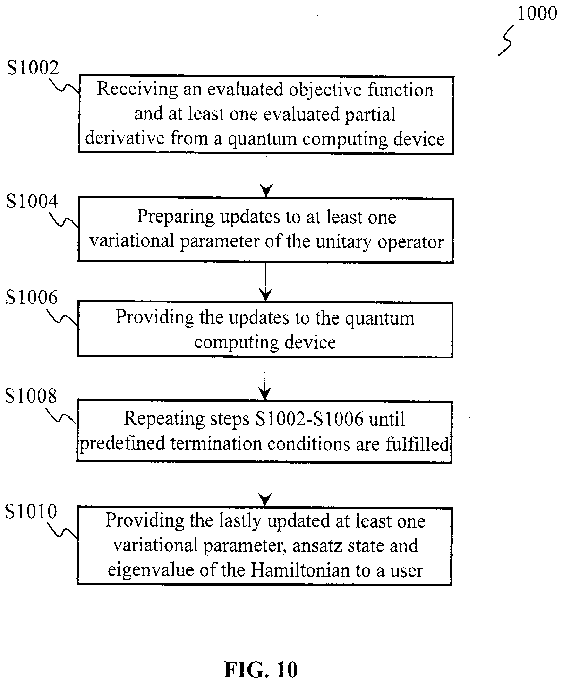

FIG. 10 shows a flowchart of a method 1000 for operating the computing device 900 in accordance with one exemplary embodiment. Each of the steps of the method 1000 is performed by the processing unit 902. The method 1000 starts with a step S1002, in which the processing unit 902 receives the evaluated objective function 410 and the evaluated at least one partial derivative 412 of the order of interest for the objective function 410 from the quantum computing device 400. Then, the method 1000 proceeds to a step S1004, in which the processing unit 902 uses the evaluated objective function 410 and the evaluated at least one partial derivative 412 of the order of interest for the objective function 410 in order to prepare an update of the at least one variational parameter of the unitary operator. Next, the processing unit 902 provide, in a step S1006, the update of the at least one variational parameter of the unitary operator to the quantum computing device 400. After that, the method 1000 proceeds to a step S1008, in which the processing unit 902 is caused to repeat the steps S1002-S1006 until a predefined termination condition is fulfilled. The predefined termination condition may comprise at least one of the following: a minimization of the evaluated objective function 410 is provided, a predefined timer is expired, and a predefined repeat count is provided. The method 1000 ends up with a step S1010, in which the processing unit 902 determines that the predefined termination condition is fulfilled and, in response, provides to a user a last update 908 of the at least one variational parameter of the unitary operator together with an ansatz state 910 and an eigenvalue 912 of the Hamiltonian, the ansatz state 910 and the eigenvalue 912 of the Hamiltonian corresponding to the last update 908 of the at least one variational parameter of the unitary operator.

In one exemplary embodiment, the processing unit 902 may be further configured to perform the steps S1002-S1008 of the method 1000 by using a supervised or unsupervised machine learning technique. The supervised or unsupervised machine learning technique may be based on neural networks, decision trees, linear regression, logistical regression, random forest, gradient boosted trees, Support Vector Machines (SVM), etc.

According to the invention, the processing unit 902 is further configured to perform the steps S1002-S1008 of the method 1000 by using a gradient descent method, Newton's method or a trust-region method. The trust-region method is reduced to a Hessian-based exact trust-region method, provided that the processing unit 902 receives the evaluated at least one partial derivative 412 of the order of interest as the Hessian matrix **H.**

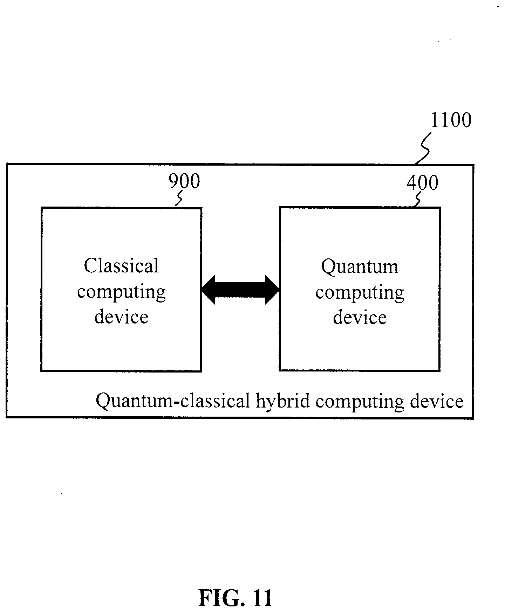

FIG. 11 shows a block diagram of a hybrid quantum-classical computing apparatus 1100 in accordance with one exemplary embodiment. The apparatus 1100 comprises the quantum computing device 400 and the computing device 900, which are configured to communicate with each other (as schematically shown by the two-headed arrow). The quantum computing device 400 and the computing device 900 may be placed within the apparatus 1100 on a single chip. During the operation of the apparatus 1100, this single chip may be cooled to temperatures applicable to achieve superconductivity (usually required for quantum computations) at least partly within the components of the computing device 900, thereby reducing the amount of heat dissipation therethrough. Moreover, depending on fabrication materials, the components of the computing device 900 may consume less power and generate less waste heat at such low temperatures compared to room temperature.

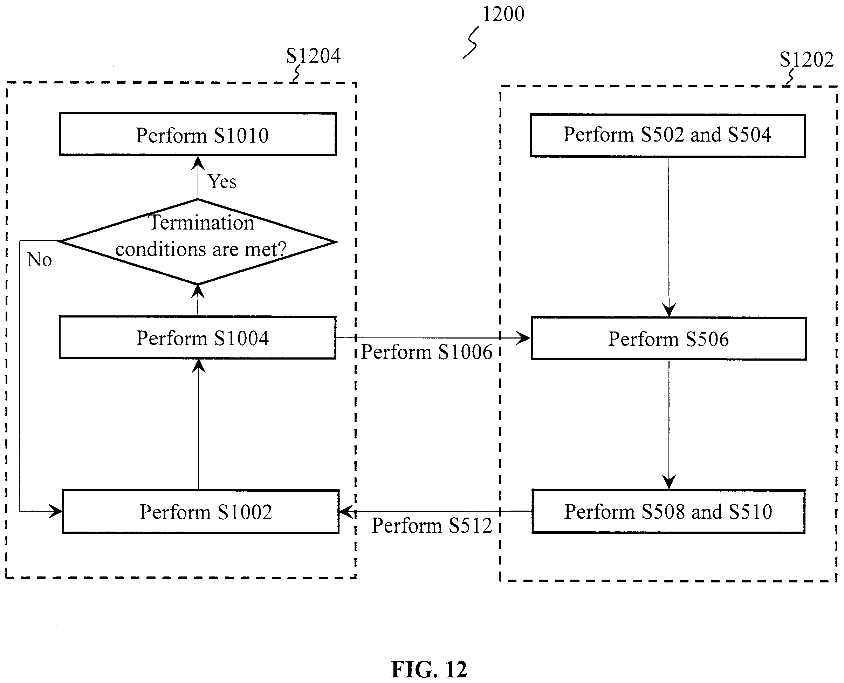

FIG. 12 shows a flowchart of a method 1200 for operating the apparatus 1100 in accordance with one exemplary embodiment. As shown, the method 1200 comprises two steps 1202 and 1204. In particular, the step 1202 is performed by the quantum computing device 400, i.e. the QPU 402, to implement the steps S502-S512 of the method 500, while the step 1204 is performed by the computing device 900, i.e. the processing unit 902, to implement the step S1002-S1010 of the method 1000. In order not to overload FIG. 12, some steps of the method 500 are combined into one block.

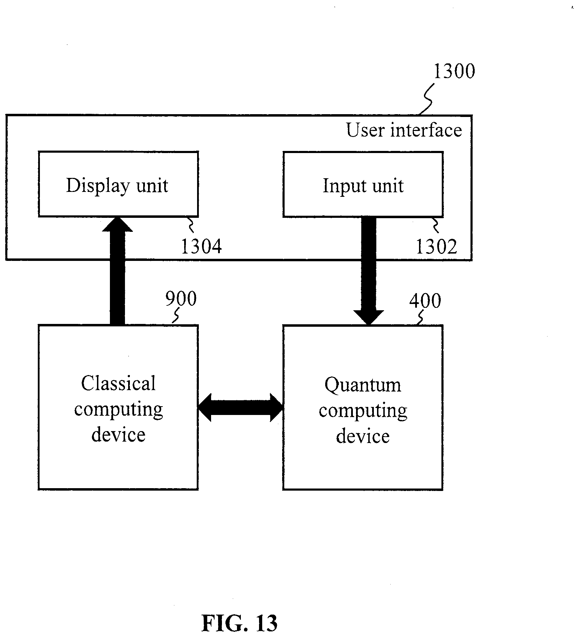

FIG. 13 shows a block diagram of a user interface 1300 in accordance with one exemplary embodiment. The user interface 1300 comprises an input unit 1302 and a display unit 1304. The input unit 1302 is communicatively coupled to the quantum computing device 400 and configured to receive and provide the user input 408 to the at least one QPU 402. The display unit 1304 is communicatively coupled to the computing device 900 and configured to receive and display the last update 908 of the at least one variational parameter of the unitary operator together with the ansatz state 910 and the eigenvalue 912 of the Hamiltonian. The user interface 1300 may be implemented based on software, firmware, hardware, or any combination thereof. In one example, the user interface 1300 may be implemented as a webpage provided by a website and displayed to a user in a web browser. In one other example, the user interface 1300 may be implemented as an application installed on a user mobile device, with the input unit 1302 and the display unit 1304 being configured to wirelessly communicate with the quantum computing device 400 and the computing device 900, respectively. Yet another example is possible, in which the user interface 1300 is part of the apparatus 1100, for which reason the input unit 1302 and the display unit 1304 may be configured to perform a wired communication with the quantum computing device 400 and the computing device 900, respectively. Irrespective of its implementation, the user interface 1300 allows even a user having no experience in quantum computing to easily obtain the above-mentioned results by simply inputting a desired form of the Hamiltonian. Thus, the user interface 1300 may be used even by general public users.

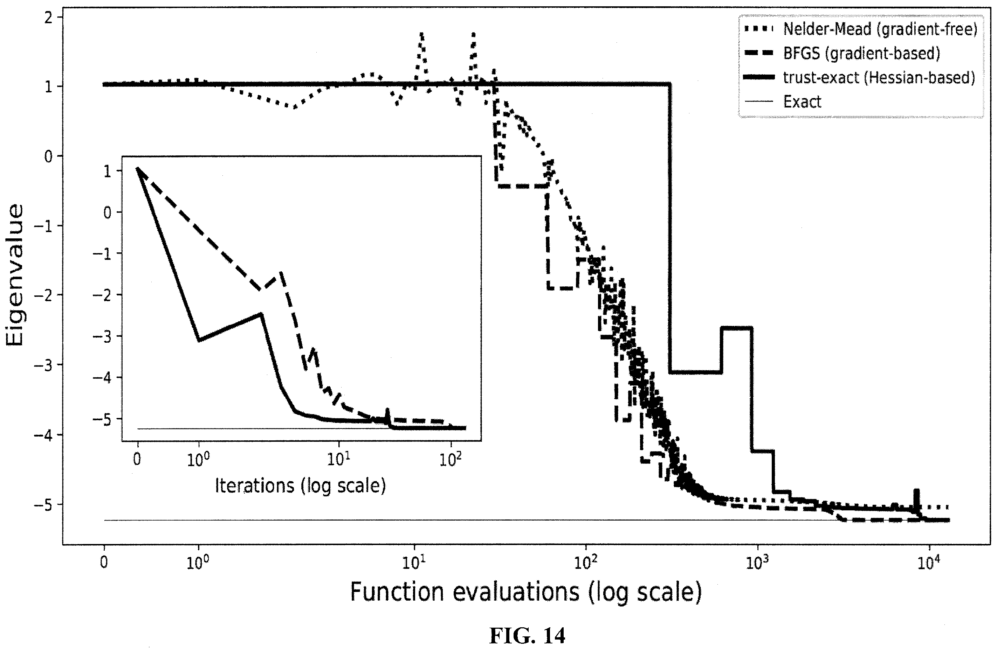

FIG. 14 shows simulation results of the VQE algorithm for a 4-qubit Ising Hamiltonian by using a three-layered checkerboard tensor network for the ansatz state. More specifically, the plot shows dependences of the approximated eigenvalue (ground state energy) of the Ising Hamiltonian on a number of objective-function evaluations for three different optimization (or minimization, in other words) methods: the Nelder-Mead method (see the dotted curve), the Broyden-Fletcher-Goldfarb-Shanno (BFGS) method (see the dashed curve), and the Hessian-based exact trust-region method (see the solid curve). At the same time, the plot insert shows dependences of the same eigenvalue of the Ising Hamiltonian on a number of iterations done in the VQE for the BFGS method and the Hessian-based exact trust-region method. As can

**EP 4 042 336 B1**

be seen from the plot and its insert, the Hessian-based exact trust-region method exhibits better performance in terms of iterations and may provide more accurate values of the ground state energy compared to the other optimization methods.

It should be noted that each step or operation of the methods 500, 1000, 1200, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the executable instructions which embody the steps or operations described above can be stored on a corresponding data carrier and executed by the QPU 402 and the processing unit 902. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

**Claims**

1.  A computing apparatus comprising:

    a quantum computing device (400) and a computing device (900),
    wherein the quantum computing device comprises:

    at least one quantum processing unit, QPU (402); and
    a memory (406) coupled to the at least one QPU (402) and configured to store executable instructions,
    wherein the at least one QPU (402) is configured, when executing the executable instructions, to:

    (i) initialize at least one qubit in an initial state;
    (ii) receive a user input indicating a Hamiltonian;
    (iii) define an ansatz state for the initial state by applying a unitary operator to the at least one qubit, the unitary operator comprising at least one variational parameter and being represented by a tensor network;
    (iv) evaluate an objective function based on the ansatz state and the Hamiltonian;
    (v) evaluate at least one partial derivative of an order of interest for the objective function by shifting the at least one variational parameter of the unitary operator by a threshold value; and
    (vi) provide the evaluated objective function and the evaluated at least one partial derivative of the order of interest for the objective function to a computing device,

    wherein the computing device (900) comprises:

    at least one processing unit (902); and
    a memory (906) coupled to the at least one processing unit (902) and configured to store executable instructions,
    wherein the at least one processing unit (902) is configured, when executing the executable instructions, to:

    (vii) receive the evaluated objective function and the evaluated at least one partial derivative of the order of interest for the objective function from the quantum computing device;
    (viii) based on the evaluated objective function and the evaluated at least one partial derivative of the order of interest for the objective function, prepare an update of the at least one variational parameter of the unitary operator;
    (ix) provide the update of the at least one variational parameter of the unitary operator to the quantum computing device, thereby causing the quantum computing device to repeat operation (iii)-(vi);
(x) repeat operations (vii)-(ix) until a predefined termination condition is fulfilled; and
(xi) in response to the predefined termination condition being fulfilled, provide to a user a last update of the at least one variational parameter of the unitary operator together with the ansatz state and an eigenvalue of the Hamiltonian, the ansatz state and the eigenvalue of the Hamiltonian corresponding to the last update of the at least one variational parameter of the unitary operator,

wherein the at least one processing unit (902) is further configured to perform operations (vii)-(x) by using a gradient descent method, Newton's method or a trust-region method, and
wherein the at least one processing unit (902) is further configured, in response to the at least one processing unit (902) receiving the evaluated at least one partial derivative of the order of interest as a Hessian matrix, to perform operations (vii)-(x) by using a Hessian-based exact trust-region method.

2. The computing device of claim 1, wherein the at least one QPU (402) is further configured to:

receive an update to the at least one variational parameter of the unitary operator from the computing device;
change the at least one variational parameter of the unitary operator based on the update; and
repeat operations (iii)-(vi).

3. The computing device of claim 1 or 2, wherein the tensor network is implemented as a tree tensor network or a checkerboard tensor network.

4. The computing device of any one of claims 1 to 3, wherein the Hamiltonian is defined based on a product of Pauli operators.

5. The computing device of any one of claims 1 to 4, wherein the at least one qubit comprises multiple qubits, the unitary operator comprises a product of unitary sub-operators each applied to corresponding two qubits of the multiple qubits, and the tensor network comprises a set of interconnected building blocks each representing one of the unitary sub-operators.

6. The computing device of any one of claims 1 to 5, wherein the at least one QPU (402) is further configured to

a) perform operation (v) by using a Hadamard test;
and/or
b) evaluate second-order partial derivatives for the objective function in operation (v); and

provide the second-order partial derivatives as a Hessian matrix to the computing device in operation (vi).

7. The computing device of any one of claims 1 to 6, wherein the unitary operator comprises a set of exponents each comprising one of the at least one variational parameter, and wherein the threshold value is equal to $\pi/2$.

8. The computing apparatus of any of the claims 1 to 7, wherein

the at least one processing unit (902) is further configured to perform operations (vii)-(x) by using a supervised or unsupervised machine learning technique;
and/or
the predefined termination condition comprises at least one of the following:

- a minimization of the evaluated objective function is provided,
- a predefined timer is expired, and
- a predefined repeat count is provided.

9. The computing apparatus of any of the claims 1 to 8 comprising a user interface (1300), comprising:

an input unit (1302) communicatively coupled to the quantum computing device (400), the input unit (1302) being configured to receive and provide the user input to the at least one QPU (402); and
a display unit (1304) communicatively coupled to the computing device (900), the display unit (1304) being configured to receive and display the last update of the at least one variational parameter of the unitary operator together with the ansatz state and the eigenvalue of the Hamiltonian.

10. A computation method, comprising the following steps to be executed by at least one quantum processing unit (QPU):

(i) initializing (S502) at least one qubit in an initial state;
(ii) receiving (S504) a user input indicating a Hamiltonian;
(iii) defining (S506) an ansatz state for the initial state by applying a unitary operator to the at least one qubit, the unitary operator comprising at least one variational parameter and being represented by a tensor network;
(iv) evaluating (S508) an objective function based on the ansatz state and the Hamiltonian;
(v) evaluating (S510) at least one partial derivative of an order of interest for the objective function by shifting the at least one variational parameter of the unitary operator by a threshold value; and
(vi) providing (S512) the evaluated objective function and the evaluated at least one partial derivative of the order of interest for the objective function to a computing device,
wherein the method comprises the following steps to be executed by at least one processing unit:

(vii) receiving (S1002) the evaluated objective function and the evaluated at least one partial derivative of the order of interest for the objective function from the at least one QPU;
(viii) based on the evaluated objective function and the evaluated at least one partial derivative of the order of interest for the objective function, preparing (S1004) an update of the at least one variational parameter of the unitary operator;
(ix) providing (S1006) the update to the at least one QPU, thereby causing the at least one QPU to repeat operations (iii)-(vi);
(x) repeating (S1008) operations (vii)-(ix) until a predefined termination condition is fulfilled; and
(xi) in response to the predefined termination condition being fulfilled, providing (S1010) to a user a last update of the at least one variational parameter of the unitary operator together with the ansatz state and an eigenvalue of the Hamiltonian, the ansatz state and the eigenvalue of the Hamiltonian corresponding to the last update of the at least one variational parameter of the unitary operator,

wherein the operations (vii)-(x) are performed by using a gradient descent method, Newton's method or a trust-region method, and
wherein, in response to receiving the evaluated at least one partial derivative of the order of interest as a Hessian matrix, performing operations (vii)-(x) by using a Hessian-based exact trust-region method.

11. A computer-readable storage medium for storing a computer code, wherein the computer code, when executed by a computing apparatus according to claim 1, causes the computing apparatus to perform the method according to claim 10.

**Patentansprüche**

1. Rechenanlage, umfassend:

eine Quantenrechenvorrichtung (400) und eine Rechenvorrichtung (900),
wobei die Quantenrechenvorrichtung Folgendes umfasst:

mindestens eine Quantenverarbeitungseinheit, QPU (402); und
einen Speicher (406), der mit der mindestens einen QPU (402) gekoppelt ist und dazu konfiguriert ist, ausführbare Anweisungen zu speichern,
wobei die mindestens eine QPU (402) dazu konfiguriert ist, beim Ausführen der ausführbaren Anweisungen Folgendes zu tun:

(i) Initialisieren mindestens eines Qubits in einem Anfangszustand;
(ii) Empfangen einer Benutzereingabe, die einen Hamilton-Operator angibt;
(iii) Definieren eines Ansatzzustands für den Anfangszustand durch Anwenden eines unitären Operators auf das mindestens eine Qubit, wobei der unitäre Operator mindestens einen Variationsparameter umfasst und durch ein Tensor-Netzwerk dargestellt wird;
(iv) Bewerten einer Zielfunktion basierend auf dem Ansatzzustand und dem Hamilton-Operator;
(v) Auswerten mindestens einer partiellen Ableitung einer Bedeutungsreihenfolge für die Zielfunktion durch Verschieben des mindestens einen Variationsparameters des unitären Operators um einen Schwellenwert; und

(vi) Bereitstellen der ausgewerteten Zielfunktion und der ausgewerteten mindestens einen partiellen Ableitung der Bedeutungsreihenfolge für die Zielfunktion an eine Rechenvorrichtung,

wobei die Rechenvorrichtung (900) Folgendes umfasst:

mindestens eine Verarbeitungseinheit (902); und
einen Speicher (906), der mit der mindestens einen Verarbeitungseinheit (902) gekoppelt ist und dazu konfiguriert ist, ausführbare Anweisungen zu speichern,
wobei die mindestens eine Verarbeitungseinheit (902) dazu konfiguriert ist, beim Ausführen der ausführbaren Anweisungen Folgendes zu tun:

(vii) Empfangen der ausgewerteten Zielfunktion und der ausgewerteten mindestens einen partiellen Ableitung der Bedeutungsreihenfolge für die Zielfunktion von der Quantenrechenvorrichtung;
(viii) basierend auf der ausgewerteten Zielfunktion und der ausgewerteten mindestens einen partiellen Ableitung der Bedeutungsreihenfolge für die Zielfunktion, Vorbereiten einer Aktualisierung des mindestens einen Variationsparameters des unitären Operators;
(ix) Bereitstellen der Aktualisierung des mindestens einen Variationsparameters des unitären Operators an die Quantenrechenvorrichtung, wodurch die Quantenrechenvorrichtung dazu veranlasst wird, die Vorgänge (iii)-(vi) zu wiederholen;
(x) Wiederholen der Vorgänge (vii)-(ix), bis eine vordefinierte Abbruchbedingung erfüllt ist; und
(xi) als Reaktion darauf, dass die vordefinierte Abbruchbedingung erfüllt ist, Bereitstellen, an einen Benutzer, einer letzten Aktualisierung des mindestens einen Variationsparameters des unitären Operators zusammen mit dem Ansatzzustand und einem Eigenwert des Hamilton-Operators, wobei der Ansatzzustand und der Eigenwert des Hamilton-Operators der letzten Aktualisierung des mindestens einen Variationsparameters des unitären Operators entsprechen,

wobei die mindestens eine Verarbeitungseinheit (902) ferner dazu konfiguriert ist, die Vorgänge (vii)-(x) unter Verwendung eines Gradientenabstiegsverfahrens, des Newton-Verfahrens oder eines Trust-Region-Verfahrens durchzuführen, und
wobei die mindestens eine Verarbeitungseinheit (902) ferner dazu konfiguriert ist, als Reaktion darauf, dass die mindestens eine Verarbeitungseinheit (902) die ausgewertete mindestens eine partielle Ableitung der Bedeutungsreihenfolge als eine Hesse-Matrix empfängt, die Vorgänge (vii)-(x) unter Verwendung einer Hesse-basierten exakten Trust-Region-Methode durchzuführen.

2. Rechenvorrichtung nach Anspruch 1, wobei die mindestens eine QPU (402) ferner zu Folgendem konfiguriert ist:

Empfangen einer Aktualisierung für den mindestens einen Variationsparameter des unitären Operators von der Computervorrichtung;
Ändern des mindestens einen Variationsparameters des unitären Operators basierend auf der Aktualisierung; und
Wiederholen der Vorgänge (iii)-(vi).

3. Rechenvorrichtung nach Anspruch 1 oder 2, wobei das Tensor-Netzwerk als ein Tree-Tensor-Netzwerk oder ein Checkerboard-Tensor-Netzwerk implementiert ist.

4. Rechenvorrichtung nach einem der Ansprüche 1 bis 3, wobei der Hamilton-Operator basierend auf einem Produkt von Pauli-Operatoren definiert ist.

5. Rechenvorrichtung nach einem der Ansprüche 1 bis 4, wobei das mindestens eine Qubit mehrere Qubits umfasst, der unitäre Operator ein Produkt aus unitären Unteroperatoren umfasst, die jeweils auf entsprechende zwei Qubits der mehreren Qubits angewendet werden, und das Tensor-Netzwerk einen Satz miteinander verbundener Bausteine umfasst, die jeweils einen der unitären Unteroperatoren darstellen.

6. Rechenvorrichtung nach einem der Ansprüche 1 bis 5, wobei die mindestens eine QPU (402) ferner zu Folgendem konfiguriert ist:

a) Durchführen von Vorgang (v) unter Verwendung eines Hadamard-Tests; und/oder

b) Auswerten partieller Ableitungen zweiter Ordnung für die Zielfunktion in Vorgang (v); und

Bereitstellen der partiellen Ableitungen zweiter Ordnung als eine Hesse-Matrix an die Rechenvorrichtung in Vorgang (vi).

7. Rechenvorrichtung nach einem der Ansprüche 1 bis 6, wobei der unitäre Operator einen Satz von Exponenten umfasst, die jeweils einen des mindestens einen Variationsparameters umfassen, und wobei der Schwellenwert gleich $\pi/2$ ist.

8. Rechenanlage nach einem der Ansprüche 1 bis 7, wobei

die mindestens eine Verarbeitungseinheit (902) ferner dazu konfiguriert ist, die Vorgänge (vii)-(x) unter Verwendung einer überwachten oder unüberwachten maschinellen Lerntechnik durchzuführen; und/oder

die vordefinierte Abbruchbedingung mindestens eine der Folgenden umfasst:

- eine Minimierung der ausgewerteten Zielfunktion wird bereitgestellt,
- ein vordefinierter Timer ist abgelaufen und
- eine vordefinierte Wiederholungszählung wird bereitgestellt.

9. Rechenanlage nach einem der Ansprüche 1 bis 8, umfassend eine Benutzerschnittstelle (1300), die Folgendes umfasst:

eine Eingabeeinheit (1302), die kommunikativ mit der Quantenrechenvorrichtung (400) gekoppelt ist, wobei die Eingabeeinheit (1302) dazu konfiguriert ist, die Benutzereingabe zu empfangen und an die mindestens eine QPU (402) bereitzustellen; und

eine Anzeigeeinheit (1304), die kommunikativ mit der Rechenvorrichtung (900) gekoppelt ist, wobei die Anzeigeeinheit (1304) dazu konfiguriert ist, die letzte Aktualisierung des mindestens einen Variationsparameters des unitären Operators zusammen mit dem Ansatzzustand und dem Eigenwert des Hamilton-Operators zu empfangen und anzuzeigen.

10. Berechnungsverfahren, umfassend die folgenden Schritte, die durch mindestens eine Quantenverarbeitungseinheit (QPU) auszuführen sind:

(i) Initialisieren (S502) mindestens eines Qubits in einem Anfangszustand;

(ii) Empfangen (S504) einer Benutzereingabe, die einen Hamilton-Operator angibt;

(iii) Definieren (S506) eines Ansatzzustands für den Anfangszustand durch Anwenden eines unitären Operators auf das mindestens eine Qubit, wobei der unitäre Operator mindestens einen Variationsparameter umfasst und durch ein Tensor-Netzwerk dargestellt wird;

(iv) Auswerten (S508) einer Zielfunktion basierend auf dem Ansatzzustand und dem Hamilton-Operator;

(v) Auswerten (S510) mindestens einer partiellen Ableitung einer Bedeutungsreihenfolge für die Zielfunktion durch Verschieben des mindestens einen Variationsparameters des unitären Operators um einen Schwellenwert; und

(vi) Bereitstellen (S512) der ausgewerteten Zielfunktion und der ausgewerteten mindestens einen partiellen Ableitung der Bedeutungsreihenfolge für die Zielfunktion an eine Rechenvorrichtung,

wobei das Verfahren die folgenden Schritte umfasst, die durch mindestens eine Verarbeitungseinheit auszuführen sind:

(vii) Empfangen (S1002) der ausgewerteten Zielfunktion und der ausgewerteten mindestens einen partiellen Ableitung der Bedeutungsreihenfolge für die Zielfunktion von der mindestens einen QPU;

(viii) basierend auf der ausgewerteten Zielfunktion und der ausgewerteten mindestens einen partiellen Ableitung der Bedeutungsreihenfolge für die Zielfunktion, Vorbereiten (S1004) einer Aktualisierung des mindestens einen Variationsparameters des unitären Operators;

(ix) Bereitstellen (S1006) der Aktualisierung an die mindestens eine QPU, wodurch die mindestens eine QPU dazu veranlasst wird, die Vorgänge (iii)-(vi) zu wiederholen;

(x) Wiederholen (S1008) der Vorgänge (vii)-(ix), bis eine vordefinierte Abbruchbedingung erfüllt ist; und

(xi) als Reaktion darauf, dass die vordefinierte Abbruchbedingung erfüllt ist, Bereitstellen (S1010), an einen Benutzer, einer letzten Aktualisierung des mindestens einen Variationsparameters des unitären Operators zusammen mit dem Ansatzzustand und einem Eigenwert des Hamilton-Operators, wobei der Ansatzzustand und der Eigenwert des Hamilton-Operators der letzten Aktualisierung des mindestens einen Variationsparameters des unitären Operators entsprechen,

wobei die Vorgänge (vii)-(x) unter Verwendung eines Gradientenabstiegsverfahrens, des Newton-Verfahrens oder eines Trust-Region-Verfahrens durchgeführt werden, und
wobei, als Reaktion auf Empfangen der ausgewerteten mindestens einen partiellen Ableitung der Bedeutungsreihenfolge als eine Hesse-Matrix, die Vorgänge (vii)-(x) unter Verwendung einer Hesse-basierten exakten Trust-Region-Methode durchgeführt werden.

**11.** Computerlesbares Speichermedium zum Speichern eines Computercodes, wobei der Computercode, wenn er durch eine Computeranlage nach Anspruch 1 ausgeführt wird, die Computeranlage dazu veranlasst, das Verfahren nach Anspruch 10 durchzuführen.

## Revendications

**1.** Appareil informatique comprenant :

un dispositif informatique quantique (400) et un dispositif informatique (900),
dans lequel le dispositif informatique quantique comprend :

au moins une unité de traitement quantique, QPU (402) ; et
une mémoire (406) couplée à l'au moins une QPU (402) et configurée pour stocker des instructions exécutables,
dans lequel l'au moins une QPU (402) est configurée, lors de l'exécution des instructions exécutables, pour :

(i) initialiser au moins un qubit dans un état initial ;
(ii) recevoir une entrée utilisateur indiquant un hamiltonien ;
(iii) définir un état d'ansatz pour l'état initial en appliquant un opérateur unitaire à l'au moins un qubit, l'opérateur unitaire comprenant au moins un paramètre variationnel et étant représenté par un réseau de tenseurs ;
(iv) évaluer une fonction objective basée sur l'état d'ansatz et l'hamiltonien ;
(v) évaluer au moins une dérivée partielle d'un ordre d'intérêt pour la fonction objective en décalant au moins un paramètre variationnel de l'opérateur unitaire d'une valeur seuil ; et
(vi) fournir la fonction objective évaluée et au moins une dérivée partielle évaluée de l'ordre d'intérêt pour la fonction objective à un dispositif informatique,

dans lequel le dispositif informatique (900) comprend :

au moins une unité de traitement (902) ; et
une mémoire (906) couplée à l'au moins une unité de traitement (902) et configurée pour stocker des instructions exécutables, dans lequel l'au moins une unité de traitement (902) est configurée, lors de l'exécution des instructions exécutables, pour :

(vii) recevoir la fonction objective évaluée et l'au moins une dérivée partielle évaluée de l'ordre d'intérêt pour la fonction objective à partir du dispositif informatique quantique ;
(viii) sur la base de la fonction objective évaluée et de l'au moins une dérivée partielle évaluée de l'ordre d'intérêt pour la fonction objective, préparer une mise à jour de l'au moins un paramètre variationnel de l'opérateur unitaire ;
(ix) fournir la mise à jour de l'au moins un paramètre variationnel de l'opérateur unitaire au dispositif informatique quantique, amenant ainsi le dispositif informatique quantique à répéter les opérations (iii) à (vi) ;
(x) répéter les opérations (vii) à (ix) jusqu'à ce qu'une condition de terminaison prédéfinie soit remplie ; et
(xi) en réponse à la condition de terminaison prédéfinie remplie, fournir à un utilisateur une dernière mise à jour de l'au moins un paramètre variationnel de l'opérateur unitaire ainsi que l'état d'ansatz et une valeur propre de l'hamiltonien, l'état d'ansatz et la valeur propre de l'hamiltonien correspondant à la dernière mise à jour de l'au moins un paramètre variationnel de l'opérateur unitaire,

dans lequel l'au moins une unité de traitement (902) est également configurée pour réaliser les opérations (vii) à (x) à l'aide d'un procédé de descente de gradient, d'un procédé de Newton ou d'un procédé de région de confiance, et

dans lequel l'au moins une unité de traitement (902) est également configurée, en réponse à l'au moins une unité de traitement (902) recevant l'au moins une dérivée partielle évaluée de l'ordre d'intérêt en tant que matrice hessienne, pour réaliser les opérations (vii) à (x) à l'aide d'un procédé de région de confiance exacte basé sur Hessienne.

2. Dispositif informatique selon la revendication 1, dans lequel l'au moins une QPU (402) est également configurée pour :

recevoir une mise à jour de l'au moins un paramètre variationnel de l'opérateur unitaire à partir du dispositif informatique ;

modifier l'au moins un paramètre variationnel de l'opérateur unitaire sur la base de la mise à jour ; et

répéter les opérations (iii) à (vi).

3. Dispositif informatique selon la revendication 1 ou 2, dans lequel le réseau de tenseurs est mis en œuvre sous la forme d'un réseau de tenseurs sous la forme d'un arbre ou d'un réseau de tenseurs en damier.

4. Dispositif informatique selon l'une quelconque des revendications 1 à 3, dans lequel l'hamiltonien est défini sur la base d'un produit d'opérateurs de Pauli.

5. Dispositif informatique selon l'une quelconque des revendications 1 à 4, dans lequel l'au moins un qubit comprend de multiples qubits, l'opérateur unitaire comprend un produit de sous-opérateurs unitaires appliqués chacun à deux qubits correspondants aux multiples qubits, et le réseau de tenseurs comprend un ensemble de blocs de construction interconnectés représentant chacun l'un des sous-opérateurs unitaires.

6. Dispositif informatique selon l'une quelconque des revendications 1 à 5, dans lequel l'au moins une QPU (402) est également configurée pour

a) réaliser l'opération (v) à l'aide d'un test de Hadamard ; et/ou
b) évaluer les dérivées partielles du second ordre pour la fonction objective dans l'opération (v) ; et

fournir les dérivées partielles du second ordre sous forme de matrice hessienne au dispositif informatique dans l'opération (vi).

7. Dispositif informatique selon l'une quelconque des revendications 1 à 6, dans lequel l'opérateur unitaire comprend un ensemble d'exposants comprenant chacun l'un de l'au moins un paramètre variationnel, et dans lequel la valeur de seuil est égale à $\pi/2$.

8. Appareil informatique selon l'une quelconque des revendications 1 à 7, dans lequel

l'au moins une unité de traitement (902) est également configurée pour réaliser des opérations (vii) à (x) à l'aide d'une technique d'apprentissage automatique supervisée ou non supervisée ;
et/ou
la condition de terminaison prédéterminée comprend au moins l'une des conditions suivantes :

- une minimisation de la fonction objective évaluée est fournie,
- un délai prédéfini a expiré, et
- un nombre de répétitions prédéfini est fourni.

9. Appareil informatique selon l'une quelconque des revendications 1 à 8, comprenant une interface utilisateur (1300), comprenant :

une unité d'entrée (1302) couplée en communication au dispositif informatique quantique (400), l'unité d'entrée (1302) étant configurée pour recevoir et fournir l'entrée utilisateur à l'au moins une QPU (402) ; et
une unité d'affichage (1304) couplée en communication au dispositif informatique (900), l'unité d'affichage (1304) étant configurée pour recevoir et afficher la dernière mise à jour de l'au moins un paramètre variationnel de l'opérateur unitaire avec l'état d'ansatz et la valeur propre de l'hamiltonien.

10. Procédé de calcul, comprenant les étapes suivantes à exécuter par au moins une unité de traitement quantique (QPU) :

(i) l'initialisation (S502) d'au moins un qubit dans un état initial ;
(ii) la réception (S504) d'une entrée utilisateur indiquant un hamiltonien ;
(iii) la définition (S506) d'un état d'ansatz pour l'état initial en appliquant un opérateur unitaire à l'au moins un qubit, l'opérateur unitaire comprenant au moins un paramètre variationnel et étant représenté par un réseau de tenseurs ;
(iv) l'évaluation (S508) d'une fonction objective basée sur l'état d'ansatz et l'hamiltonien ;
(v) l'évaluation (S510) d'au moins une dérivée partielle d'un ordre d'intérêt pour la fonction objective en décalant l'au moins un paramètre variationnel de l'opérateur unitaire d'une valeur seuil ; et
(vi) la fourniture (S512) de la fonction objective évaluée et l'au moins une dérivée partielle évaluée de l'ordre d'intérêt pour la fonction objective à un dispositif informatique,
dans lequel le procédé comprend les étapes suivantes à exécuter par au moins une unité de traitement :

(vii) la réception (S1002) de la fonction objective évaluée et l'au moins une dérivée partielle évaluée de l'ordre d'intérêt pour la fonction objective à partir de l'au moins une QPU ;
(viii) sur la base de la fonction objective évaluée et de l'au moins une dérivée partielle évaluée de l'ordre d'intérêt pour la fonction objective, la préparation (S1004) d'une mise à jour de l'au moins un paramètre variationnel de l'opérateur unitaire ;
(ix) la fourniture (S1006) de la mise à jour à l'au moins une QPU, amenant ainsi l'au moins une QPU à répéter les opérations (iii) à (vi) ;
(x) la répétition (S1008) des opérations (vii) à (ix) jusqu'à ce qu'une condition de terminaison prédéfinie soit remplie ; et
(xi) en réponse à la condition de terminaison prédéfinie remplie, la fourniture (S1010) à un utilisateur d'une dernière mise à jour de l'au moins un paramètre variationnel de l'opérateur unitaire ainsi que de l'état d'ansatz et une valeur propre de l'hamiltonien, l'état d'ansatz et la valeur propre de l'hamiltonien correspondant à la dernière mise à jour de l'au moins un paramètre variationnel de l'opérateur unitaire,

dans lequel les opérations (vii) à (x) sont réalisées à l'aide d'un procédé de descente de gradient, d'un procédé de Newton ou d'un procédé de région de confiance, et
dans lequel, en réponse à la réception de l'au moins une dérivée partielle évaluée de l'ordre d'intérêt en tant que matrice hessienne, la réalisation des opérations (vii) à (x) à l'aide d'un procédé de région de confiance exacte basée sur Hessienne.

11. Support de stockage lisible par ordinateur pour stocker un code informatique, dans lequel le code informatique, lorsqu'il est exécuté par un appareil informatique selon la revendication 1, amène l'appareil informatique à réaliser le procédé selon la revendication 10.

**FIG. 1**

EP 4 042 336 B1

FIG. 2

FIG. 3B

FIG. 3A

24

EP 4 042 336 B1

**FIG. 4**

S502 — Initializing at least one qubit in an initial state

S504 — Receiving a user input indicating a Hamiltonian

S506 — Defining an ansatz state for the initial state by applying a unitary operator to the at least one qubit

S508 — Evaluating an objective function based on the ansatz state and the Hamiltonian

S510 — Evaluating at least one partial derivative of an order of interest for the objective function

S512 — Providing the evaluated objective function and the evaluated at least one partial derivative to a classical computing device

500

**FIG. 5**

EP 4 042 336 B1

600

602

604

$U(\boldsymbol{\theta})$

$U_1^{12}(\boldsymbol{\theta}_1)$

$U_2^{34}(\boldsymbol{\theta}_2)$

$U_3^{14}(\boldsymbol{\theta}_3)$

$U_4^{23}(\boldsymbol{\theta}_4)$

$U_3^{14}(\boldsymbol{\theta}_3)$

$U_5^{12}(\boldsymbol{\theta}_5)$

$U_6^{34}(\boldsymbol{\theta}_6)$

**FIG. 6**

**FIG. 7**

EP 4 042 336 B1

EP 4 042 336 B1

800

802

$R_y(\theta_1)$

$X$

$R_x(\theta_2)$

$R_z(\theta_3)$

$R_x(\theta_4)$

$R_x(\theta_5)$

$R_z(\theta_6)$

$R_x(\theta_7)$

812

818

804

806

814

816

808

810

**FIG. 8**

**FIG. 9**

S1002

Receiving an evaluated objective function and at least one evaluated partial derivative from a quantum computing device

S1004

Preparing updates to at least one variational parameter of the unitary operator

S1006

Providing the updates to the quantum computing device

S1008

Repeating steps S1002-S1006 until predefined termination conditions are fulfilled

S1010

Providing the lastly updated at least one variational parameter, ansatz state and eigenvalue of the Hamiltonian to a user

**FIG. 10**

1100

900 Classical computing device

400 Quantum computing device

Quantum-classical hybrid computing device

**FIG. 11**

EP 4 042 336 B1

1200

S1204

S1202

| Perform S1010 |
|---|

Yes

Termination conditions are met?

No

| Perform S1004 |
|---|

Perform S1006

| Perform S502 and S504 |
|---|

| Perform S506 |
|---|

| Perform S1002 |
|---|

Perform S512

| Perform S508 and S510 |
|---|

**FIG. 12**

1300

User interface

Display unit

Input unit

1304

1302

900

400

Classical computing device

Quantum computing device

**FIG. 13**

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARCELLO BENEDETTI et al.** *Parameterized Quantum Circuits as Machine Learning Models*
- **ALEXEI UVAROV et al.** *Machine Learning Phase Transitions with a Quantum Processor*
- **KAINING ZHANG et al.** *Quantum algorithm for finding the negative curvature direction in non-convex optimization*
- **MARIA SCHULD et al.** *Evaluating analytic gradients on quantum hardware*